# EUROPÄISCHE PATENTSCHRIFT

(11) **EP 0 480 119 B1**
(45) Veröffentlichungstag und Bekanntmachung des Hinweises auf die Patenterteilung: **01.12.1993**
(21) Anmeldenummer: 91104133.3
(22) Anmeldetag: 18.03.1991
(51) Int. Cl.: E06B 9/32

(54) **Verfahren und Vorrichtung zum Steuern von Raffstores**
Method and device for controlling venetian blinds
Méthode et dispositif de contrôle des stores vénitiens

(30) Priorität: 11.10.1990 DE 4032221
(43) Veröffentlichungstag der Anmeldung: 15.04.1992
(73) Patentinhaber: WAREMA Renkhoff GmbH, D-97828 Marktheidenfeld (DE)
(72) Erfinder: Kern, Michael, W-8771 Triefenstein-Homburg (DE); Ruckstetter, Günter, W-8774 Rothenfels (DE); Schüll, Ekkehard, W-8771 Hafenlohr (DE); Zimmermann, Frank, W-8700 Würzburg (DE)
(74) Vertreter: Jochem, Bernd, Dipl.-Wirtsch.-Ing.

(56) Entgegenhaltungen:
- EP-A- 0 199 931
- EP-A- 0 328 053
- EP-B- 0 251 311
- DE-A- 2 931 956
- FR-A- 2 189 622
- US-A- 4 773 733

## Beschreibung

Die Erfindung betrifft eine Vorrichtung zum Steuern wenigstens eines Raffstores mit einem aus Lamellen bestehenden Behang, der zwischen einer gerafften Stellung und einer Verschattungsstellung bewegbar ist und dessen Lamellen durch einen Motor wendbar und mittels eines mit einer Lamelle verbundenen Fotosensors im Abschirmwinkel einstellbar sind, wobei der Fotosensor aus zwei mit Bezug auf das Fenster in Richtung von auβen nach innen derart hintereinander angeordneten Fotodioden besteht, daß sie infolge ungleichmäßiger Bestrahlung eine bestimmte Abweichung des Neigungswinkels der einfallenden Sonnenstrahlen von einer Normalen auf der Grundfläche der Lamelle registrieren.

Bei modernen Bürogebäuden spielt der Sonnenschutz eine wichtige Rolle, um übermäßige Erwärmung der Arbeitsräume zu verhindern, bei Vorhandensein einer Klimaanlage Energie einzusparen und an Bildschirm-Arbeitsplätzen für Blendschutz zu sorgen. Es ist bisher üblich, die Raffstore einer Bürohausfassade mittels auf dem Dach des Gebäudes installierter Sensoren zentral zu steuern. Dabei tritt der Nachteil auf, daß je nach Umständen des Einzelfalls verschiedener Fenster einer Fassade voll dem Sonnenlicht ausgesetzt sind, während andere Fenster derselben Fassade im Schatten anderer Gebäude oder Gebäudeteile liegen. Das Problem der unterschiedlichen Beleuchtung der Fenster einer Fassade wird noch dadurch erschwert, daß sich die Situation mit der Wanderung der Sonne im Verlauf eines Tages je nach Jahreszeit verändert. Es sind in der letzten Zeit Versuche unternommen worden, bei zentral gesteuerten Sonnenschutzanlagen durch aufwendige Verschattungsdiagramme und astronomische Uhren die Funktion der Steuerungsautomatik zu verbessern. Dadurch kann jedoch der grundlegende Nachteil, daß die besonderen Beleuchtungsverhältnisse eines speziellen Fensters unberücksichtigt bleiben, nicht behoben werden.

Ein weiterer Mangel zentral gesteuerter Raffstore besteht darin, daß nach dem Auslösen der Absenkbewegung bei einer bestimmten Grundhelligkeit zunächst über eine vorgegebene Zeit das Tief-Kommando für alle Raffstore bestehen bleibt, bevor nach Ablauf dieser vorbestimmten Tieflaufzeit ein Lamellen-Öffnungsimpuls ausgelöst wird. Sind unterschiedlich lange Behänge an einer Fassade, so muß im allgemeinen die Tieflaufzeit des längsten Behanges eingestellt werden. Die Räume mit kürzeren Laufzeiten bleiben unnötig lange abgedunkelt, bis der Öffnungsimpuls kommt. Der daraufhin eingestellte Öffnungswinkel der Lamellen kann dann je nach Tages- und Jahreszeit und der besonderen Lage eines Fensters völlig falsch sein.

Es ist aus der US-A-4,773,733 eine Steuervorrichtung der eingangs genannten Art bekannt, bei welcher ein Lamellenbehang von Hand in Verschattungsstellung herabgelassen und später wieder in die geraffte Stellung hochgezogen wird. An einer der Lamellen ist ein Fotosensor angebracht, der aus zwei hintereinander in derselben Ebene angeordneten Fotodioden besteht, die durch einen zwischen ihnen aufragenden Steg getrennt sind, welcher je nach der Stellung der Lamellen und der Einfallrichtung der Sonnenstrahlen die eine oder die andere Fotodiode stärker beschattet. Wegen der dadurch bedingten großen Höhe des Fotosensors muß er derart an einer Seitenkante der ihn tragenden Lamelle befestigt sein, daß er über diese hinaus nach außen vorsteht und somit die notwendige Einbautiefe, z. B. zwischen zwei Fensterscheiben, und die Gehäusetiefe vergrößert. Da die Jalousie manuell herabgelassen und hochgezogen wird und die Steuervorrichtung nur die Schrägstellung der Lamellen steuert, eignet sie sich nicht für Bürogebäude, bei denen ein gleichmäßiges Aussehen der Fassade angestrebt wird.

Eine aus einer Vielzahl von transparenten, auf der Unterseite mit Prismen versehenen Lamellen bestehende Sonnenschutzeinrichtung, bei welcher die Neigung der Lamellen durch einen an einer Lamelle befestigten Fotosensor gesteuert wird, ist auch in der EP-A1-0199931 beschrieben. Obgleich der Fotosensor ebenfalls mit einem hoch aufragenden, Schatten bildenden Steg versehen ist, kann er in diesem Fall unmittelbar auf einer Lamelle angebracht sein, weil die Lamellen nicht gerafft werden. Bei einer ähnlichen Sonnenschutzeinrichtung gemäß EP-B-0 251 311 werden zwei Fotodioden auf unterschiedlichen geneigten Prismenflächen auf der Unterseite einer Lamelle angebracht, wobei man die Reflexionswirkung der Prismen für die Feststellung der richtigen Lage der Lamelle ausnutzt. Diese Konstruktion läßt sich jedoch nicht auf Jalousien mit undurchsichtigen Lamellen übertragen.

Weitere bekannte Vorrichtungen sehen das Absenken des Behangs durch Handsteuerung und die Ausrichtung der Lamellen mittels eines fest im Raum angebrachten Lichtsensors (US-A-3,646,985, US-A-4,644,990) oder ganz allgemein einen auf die Helligkeit und den Sonnenwinkel ansprechenden Signalgeber vor, der die Stellung des Behangs und der Lamellen steuert, wobei Art und Ort der Anbringung des Signalgebers offen bleiben (DE-A-26 27 219).

Der Erfindung liegt die Aufgabe zugrunde, eine Steuervorrichtung der eingangs genannten Art zu schaffen, welche sich raumsparend montieren läßt und mittels welcher insbesondere bei Gebäuden, deren Fensterflächen in einer Fassade unterschiedlichem Lichteinfall ausgesetzt sind, eine möglichst gleichmäßige Beschattung der Räume erzielt wird.

Zur Lösung der vorstehenden Aufgabe wird erfindungsgemäß vorgeschlagen, daß der Fotosensor in einer Durchbrechung der Lamelle sitzt und die Fotodioden miteinander einen Winkel bilden, und daß ein weiterer Fotosensor vorhanden ist, welcher bei Erreichen einer bestimmten Grundhelligkeit ein Steuersignal zur Bewegung des Behangs mittels des Motors aus der gerafften Stellung in eine Verschattungsstellung erzeugt.

Die neue Steuervorrichtung läßt sich auch bei Vorhandensein einer zentralen Steuereinrichtung realisieren, die für ein gleichmäßiges Erscheinungsbild einer Fassade sorgt und in bekannter Weise z. B. mit einem Windsensor zusammenwirkt, um bei einer bestimmten Windgeschwindigkeit die Raffstore hochzuziehen. Die Erfindung läßt diese übergeordneten Aufgaben einer zentralen Steuereinrichtung unberührt, ergänzt sie aber in vorteilhafter Weise durch eine individuelle Regelung des Lichteinfalls in Verschattungsstellung. Die neue Vorrichtung ist anwendbar sowohl bei Raffstores (Jalousien) mit waagerechten als auch bei solchen mit senkrechten Lamellen (Vertikaljalousien).

Die optimale Steuerung des Abschirmwinkels kann wegen der vorgeschlagenen individuellen Steuerung der einzelnen Raffstore sofort beginnen, nachdem jeweils die Tiefstellung erreicht worden ist, ohne Rücksicht darauf, daß längere Behänge an derselben Fassade noch eine längere Zeit benötigen, um die Tiefstellung zu erreichen und dann im Abschirmwinkel eingestellt zu werden.

Der erfindungsgemäße Vorschlag ist aber auch in dem Sinne zu verstehen, daß die Raffstore einer Fassade zwar normalerweise zentral gesteuert auf- und abfahren, jedoch bei Über- oder Unterschreiten bestimmter Grenzwerte der Grundhelligkeit ein einzelner Raffstore auch einzeln abgesenkt oder hochgezogen werden kann.

Die Einfachheit der vorgeschlagenen Steuervorrichtung resultiert daraus, daß in an sich bekannter Weise der Fotosensor bei sich änderndem Sonnenstand der Sonne nachgeführt wird, wobei die hierzu notwendige Bewegung des Fotosensors durch den Wendeantrieb der Lamellen bewirkt werden kann. Eine Besonderheit stellt dabei die vorgeschlagene Befestigung des Fotosensors in einer Durchbrechung einer Lamelle und die Anordnung von zwei miteinander einen Winkel bildenden Fotodioden dar. Diese können etwa dach- oder V-förmig mit Bezug auf die Grundfläche der Lamelle angeordnet sein, so daß die von ihnen erzeugten Steuerspannungen nur dann gleich groß sind, wenn sie beide unter demselben Winkel mit Sonnenstrahlen beaufschlagt werden, d. h. die Sonne senkrecht auf die Grundfläche der Lamelle scheint. Aufgrund dieser Tatsache läßt sich durch Verschwenken der Lamelle der aktuelle Sonnenstand ermitteln und die Lamelle im optimalen Abschirmwinkel einstellen.

Der in einer Lamelle sitzende, infolge der dach- oder V-förmigen Anordnung der Fotodioden verhaltnismäßig flache Fotosensor befindet sich im gerafften Zustand des Behangs zwischen den Lamellen, so daß er von diesen überdeckt und funktionsunfähig ist. Dennoch erlaubt die vorgeschlagene Steuervorrichtung eine automatische Steuerung des Behangs, da erfindungsgemäß ein weiterer Fotosensor vorhanden ist, welcher bei Erreichen einer bestimmten Grundhelligkeit einen Steuerimpuls erzeugt. Vorzugsweise ist der weitere Fotosensor vor oder neben dem Behang, z. B. an einem Gehäuse oder Führungsteil des Raffstores, zu befestigen und hat mehrere, zweckmässigerweise drei, auf unterschiedliche Himmelsrichtungen ausgerichtete Fotodioden, welche zusammen den Lichteinfall über den Winkelbereich von 180° vor dem Raffstore erfassen.

Wenn Steuervorrichtungen in der zuletzt genannten Ausführung verwendet werden, kann man grundsätzlich ohne zentrale Steuervorrichtung auskommen. Das Absenken und Hochziehen des Raffstores wird in diesem Fall von dem weiteren Fotosensor entsprechend der jeweiligen Grundhelligkeit gesteuert, und im herabgelassenen Zustand übernimmt der an einer Lamelle montierte Sonnensuch-Sensor die Steuerung des Abschirmwinkels der Lamellen. Wie bereits erwähnt, kann aber auch das Zusammenwirken mit einer zentralen Steuereinrichtung sinnvoll sein, um soweit wie möglich ein gleichmäßiges Aussehen der Fassade zu erhalten und die Raffstore vor Windschäden zu bewahren. Bei einer solchen kombinierten Steuerung wird zunächst das Herablassen und Hochziehen sämtlicher Raffstore einer Fassade zentral gesteuert. Nur wenn an einzelnen Fenstern bestimmte Grenzwerte der Grundhelligkeit über- oder unterschritten werden, sorgen die dort angebrachten weiteren Fotosensoren dafür, daß die betreffenden Raffstore situationsgerecht hochgezogen oder abgesenkt werden.

Es kann vorgesehen sein, daß der genannte Sonnensuch-Sensor schon geringe Winkelabweichungen der einfallenden Sonnenstrahlen von der Normalen auf der Grundfläche der Lamelle registriert und dann für eine Änderung des Abschirmwinkels in der Richtung sorgt, daß die Sonnenstrahlen praktisch immer senkrecht auf die Grundfläche der Lamelle fallen. Die Erfindung läßt sich aber auch so ausführen, daß ständig ein bestimmter Höhenwinkel zwischen den einfallenden Sonnenstrahlen und der Normalen auf der Grundfläche der Lamelle aufrecht erhalten wird, um etwas mehr Licht in einen Raum einzulassen als bei senkrecht zu den einfallenden Sonnenstrahlen gerichteten Lamellen. Die von der Steuervorrichtung gesteuerten Korrekturbewegung dienen im letztgenannten Fall dazu, den vorbestimmten Winkel zwischen den einfallenden Sonnenstrahlen und der Grundfläche der Lamelle trotz sich ändernden Sonnenstandes beizubehalten. Als Grundfläche wird die maximale Projektionsfläche einer Lamelle verstanden.

Die Erfindung wird nachstehend anhand von in der Zeichnung dargestellten Ausführungsbeispielen näher erläutert. Es zeigen:
- Fig. 1: eine vereinfachte Seitenansicht eines Raffstores mit zugeordneten Fotosensoren;
- Fig. 2: einen Querschnitt durch eine Lamelle des Raffstores nach Fig. 1 mit einem daran montierten Fotosensor;
- Fig. 3 A, B, C: verschieden Ansichten eines neben dem Raffstore nach Fig. 1 montierten Fotosensors zur Ermittlung der Grundhelligkeit.

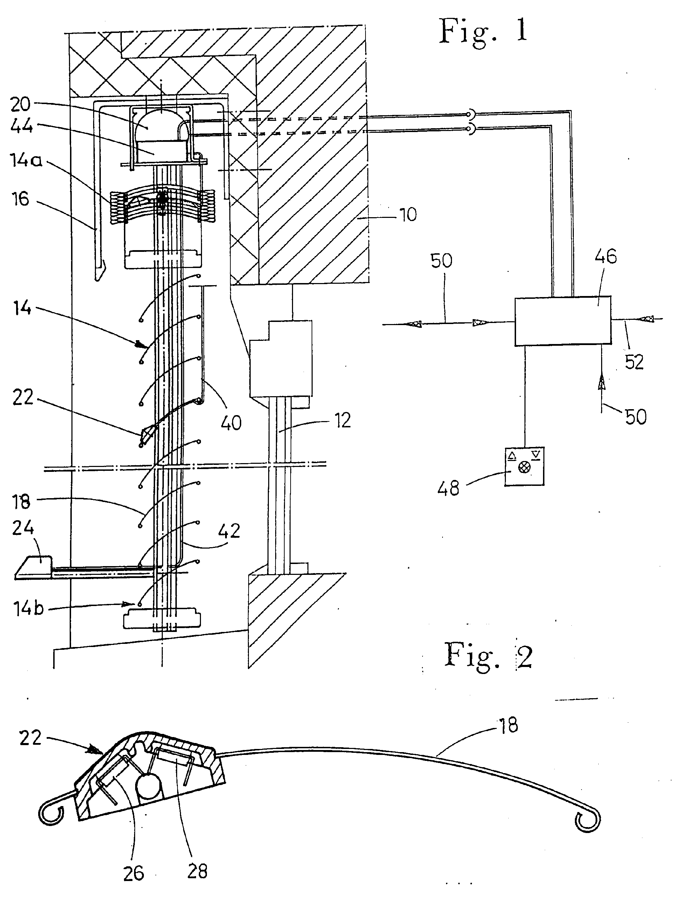

In Fig. 1 ist ein Ausschnitt einer Gebäudewand 10 mit einem Fenster 12 und einem außenseitig davor angeordneten Raffstore 14 dargestellt. Letzterer ist der Einfachheit halber sowohl in der hochgezogenen, gerafften Position (bei 14a) als auch in der herabgelassenen Position (siehe bei 14b) gezeigt. In der Position 14a ist der Raffstore 14 in einem Gehäuse 16 aufgenommen. Das Hoch- und Tieffahren des Raffstores 14 sowie das Wenden der Lamellen 18 seines Behangs erfolgt in bekannter Weise mittels eines Elektromotors 20 und eines Wendegetriebes, wie es z. B. in der DE-OS 36 25 365 beschrieben ist. Grundsätzlich ist die nachstehend beschriebene Besonderheit unabhängig von der Anzahl, Form und Größe der Lamellen 18 sowie deren Antrieb und Führung. Wesentlich ist nur, daß sich die Lamellen 18 des Behangs mittels eines steuerbaren motorischen Antriebs wenden, d. h. auf verschiedene Abschirmwinkel einstellen lassen.

Gemäß Fig. 1 ist an einer der Lamellen 18 ein Fotosensor 22 befestigt, welcher in der Lage ist festzustellen, ob das schräg von oben einfallende Sonnenlicht senkrecht auf die Grundfläche der Lamellen trifft bzw. in welcher Richtung die einfallenden Sonnenstrahlen in einer senkrechten Querebene durch die Lamellen von der Normalen auf der Grundfläche der Lamellen abweichen. Auf den grundsätzlichen Aufbau des Fotosensors 22 wird nachstehend im Zusammenhang mit Fig. 2 noch näher eingegangen.

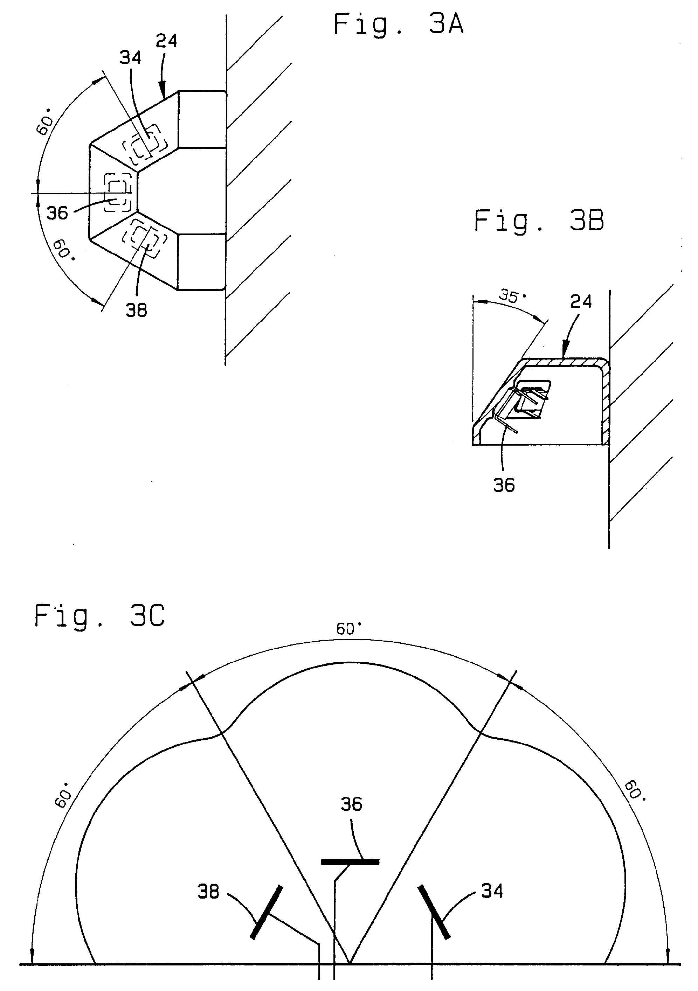

Neben dem Raffstore 14 ist noch ein weiterer Fotosensor 24 montiert. Er kann z. B. am Mauerwerk neben der Festeröffnung, an einer Führung der Lamellen 18 oder am Gehäuse 16 befestigt sein. Dieser weitere Fotosensor 24 ermittelt die Grundhelligkeit und steuert das Absenken und Hochziehen des Raffstores 14. Er wird im Zusammenhang mit Fig. 3 näher erläutert.

Der Fotosensor 22 wird gemäß Fig. 2 vorzugsweise nahe der äußeren Längskante einer Lamelle 18 in eine Durchbrechung derselben eingesetzt. Er besteht im Ausführungsbeispiel nach Fig. 2 aus zwei in transparentem Kunststoff, z. B. Acrylglas, eingeschlossenen Fotodioden 26, 28, die unter einem bestimmten Giebelwinkel dachförmig angeordnet sind. Es ist ersichtlich, daß die Steuerspannung der beiden Fotodioden 26, 28 nur dann gleich groß ist, wenn beide mit derselben Intensität von den Sonnenstrahlen getroffen werden, und dies wiederum ist nur dann der Fall, wenn die Sonnenstrahlen parallel zur Winkelhalbierenden der Giebelanordnung der Fotodioden 26, 28 einfallen. Ist dagegen die Steuerspannung einer der beiden Fotodioden 26, 28 niedriger als die der anderen, so läßt sich daraus schließen, daß die Sonnenstrahlen unter einem spitzen Winkel zu der genannten Winkelhalbierenden einfallen und daß die Fotodiode, welche die kleinere Steuerspannung erzeugt, in Richtung zu der anderen Fotodiode hin verschwenkt werden muß, um wieder den gleichgewichtigen Zustand zu erreichen, bei dem beide Fotodioden gleichmäßig bestrahlt werden und vorzugsweise die Grundflächen der parallel geführten Lamellen 18 senkrecht zu den einfallenden Sonnenstrahlen ausgerichtet sind.

Der in Fig. 3 A in Draufsicht und in Fig. 3 B im Querschnitt dargestellte weitere Fotosensor 24 zur Ermittlung der Grundhelligkeit besteht aus drei nebeneinander angeordneten Fotodioden 34, 36, 38, die jeweils unter einem Zwischenwinkel von 60° in verschiedene Himmelsrichtungen weisen und dabei gemäß Fig. 3 B unter einem Winkel von 35° zur Senkrechten schräg liegen. Da jede der Fotodioden 34, 36, 38 gemäß Fig. 3 C jeweils einen Aufnahmebereich von etwa 60° hat, wird insgesamt die Grundhelligkeit über den gesamten Bereich von 180° vor einer Gebäudefassade erfaßt.

Die mit 40 bezeichneten Anschlußleitungen des Fotosensors 22 und die Anschlußleitungen 42 des Fotosensors 24 sind entlang der Führungsschienen oder des Behangs des Raffstores zu einem in oder an dessen Oberkasten installierten Verteilerkasten 44 geführt. Dieser ist mittels einer Steckerkupplung mit einer Motorsteuereinheit 46 verbunden, welche an einer geeigneten Stelle, möglichst in nicht zu großer Entfernung vom Raffstore 14, im Gebäude installiert ist. An die Motorsteuereinheit 46 ist außerdem ein üblicher Taster 48 für die Einzelbedienung angeschlossen. Er gestattet die Einstellung der Lamellen des Raffstores von Hand, um z. B. einen Raum wegen einer Filmvorführung vollständig abzudunkeln. Darüber hinaus sind an der Motorsteuereinheit 46 weiterhin angedeutet ein Anschluß 50 einer zentralen Steuereinrichtung, eine serielle Schnittstelle 50 zur Verbindung mit einem Computer und Datenspeicher sowie ein Netzanschluß 52 für die Versorgung des Motors 20 mit 220 Volt Betriebsspannung und der mit den Fotosensoren 22 und 24 zusammenwirkenden Steuervorrichtung mit einer Steuerspannung von 24 Volt. Schließlich ist die Motorsteuereinheit 46 über eine Steckerkupplung mit dem Motor 20 verbunden, um diesen entsprechend den verschiedenen Steuereingängen der Motorsteuereinheit 46 zu steuern.

Die vorstehend beschriebene Steuervorrichtung funktioniert wie folgt:

Es sei angenommen, daß sich im Ausgangszustand die Lamellen 18 des Raffstores 14 in der gerafften, oberen Stellung 14a befinden. Jetzt kann entweder über den Anschluß 50 von einer zentralen Steuereinrichtung oder bei einer bestimmten Grundhelligkeit von dem Fotosensor 24 ein Auslösesignal für Tieffahrt des Raffstores kommen. Sobald die Tiefstellung 14b erreicht ist, erfolgt die Steuerung des Abschirmwinkels der Lamellen 18 mittels des Fotosensors 22, unabhängig davon, ob andere Raffstore derselben Fassade, welche gleichzeitig abgesenkt wurden, ihre Tiefstellung noch nicht erreicht haben, weil ihr Behang länger ist. Die Steuerung des Abschirmwinkels der Lamellen 18 mittels des Fotosensors 22 bleibt danach ständig wirksam und ändert die Stellung der Lamellen entsprechend dem sich ändernden Sonnenstand, bis der Raffstore durch ein von der zentralen Steuereinrichtung oder dem Fotosensor 24 ausgelöstes Hochfahrsignal wieder hochgezogen und gerafft wird.

Die beschriebene Steuervorrichtung bietet durch das Zusammenwirken des richtungsabhängigen Fotosensors 22 und des weiteren Fotosensors 24 für die Grundhelligkeit die Möglichkeit, daß eine Anzahl Raffstore im herabgelassenen Zustand, in welchem sie normalerweise mittels des richtungsabhängigen Fotosensors 22 gesteuert werden, vorübergehend durch den Fotosensors 24 in eine horizontale Lamellenstellung umgesteuert werden, wenn sie in den Schatten einer Wolke gelangen. Sobald sich dann wieder die Wolke verzogen hat und die Grundhelligkeit ansteigt, übernimmt erneut der richtungsabhängige Fotosensor 22 die Steuerung des Abschirmwinkels der Lamellen 18 und sorgt für die Verstellung aus der horizontalen Lage in die dem Sonnenstand entsprechende optimale Abschirmstellung.

Die manuelle Einstellung des Lamellenwinkels mittels des Tasters 48 kann in der Weise in die vorstehend beschriebene Steuerung integriert sein, daß die automatische Verstellung des Abschirmwinkels mittels des Fotosensors 22 unterbleibt, wenn der Behang durch zweimalige Betätigung des Tasters 48 manuell heruntergefahren worden ist und die Lamellen in die geschlossene Stellung gebracht wurden. Die Automatik geht dann davon aus, daß es sich um eine absichtliche Verdunklung handelt, z. B. für einen Diavortrag. War hingegen der Behang durch einmalige Betätigung des Tasters 48 manuell heruntergefahren worden, werden die Lamellen auf einen bestimmten Winkel von z. B. 38° eingestellt und es wird der optimale Winkel durch den Sonnensuchsensor 22 erst dann nachgestellt, wenn eine bestimmte Helligkeit überschritten wird. Auch wenn nach einer Tätigkeit der Suchautomatik manuell in die Lamellenstellung eingegriffen wird, schaltet sich die Sonnensuchautomatik ab. Sie tritt erst wieder in Aktion, wenn kurzzeitig eine Hauptfahrrichtung aktiviert und danach gestoppt wird.

Die erfindungsgemäße Steuervorrichtung ist vorstehend im Zusammenhang mit der Steuerung eines einzelnen Raffstores beschrieben worden. Es versteht sich, daß dann, wenn eine Mehrzahl von Fenstern einer Fassade grundsätzlich zu jeder Jahres- und Tageszeit denselben Lichtverhältnissen ausgesetzt sind und auch in den zugeordneten Räumen des Gebäudes im wesentlichen dieselben Anforderungen an die Beleuchtung gestellt werden, ein einziger Sonnensuchsensor 22 an einer Lamelle 18 eines der Raffstores sowie ein einziger weiterer Fotosensor 24 neben einem der Fenster genügen, um alle in ihrer Steuerung miteinander verbundenen Raffstore jeweils parallel zu steuern. In allen Anwendungsfällen kann die Übermittlung der Meß- und Steuersignale von den Fotosensoren zur Motorsteuereinheit und von dieser zum Motor auch drahtlos erfolgen. Eine Funkverbindung kann ebenfalls zur zentralen Steuervorrichtung bestehen. Meldungen über die Schnittstelle 50 können auch Fehlermeldungen sein, die eine Identifizierung und Lokalisierung des Fehlers ermöglichen. An die Stelle von Fotodioden könnten ggf. auch Fototransistoren treten.

## Patentansprüche

1. Vorrichtung zum Steuern wenigstens eines Raffstores (14) mit einem aus Lamellen (18) bestehenden Behang, der zwischen einer gerafften Stellung (14a) und einer Verschattungsstellung bewegbar ist und dessen Lamellen (18) durch einen Motor (20) wendbar und mittels eines mit einer Lamelle (18) verbundenen Fotosensors (22) im Abschirmwinkel einstellbar sind, wobei der Fotosensor (22) aus zwei mit Bezug auf das Fenster (12) in Richtung von außen nach innen derart hintereinander angeordneten Fotodioden (26, 28) besteht, daß sie infolge ungleichmäßiger Bestrahlung eine bestimmte Abweichung des Neigungswinkels der einfallenden Sonnenstrahlen von einer Normalen auf der Grundfläche der Lamelle registrieren, **dadurch gekenn****zeichnet,** daß der Fotosensor (22) in einer Durchbrechung der Lamelle (18) sitzt und die Fotodioden (26, 28) miteinander einen Winkel bilden, und daß ein weiterer Fotosensor (24) vorhanden ist, welcher bei Erreichen einer bestimmten Grundhelligkeit ein Steuersignal zur Bewegung des Behangs mittels des Motors (20) aus der gerafften Stellung (14a) in eine Verschattungsstellung erzeugt.

2. Vorrichtung nach Anspruch 1, **dadurch gekennzeichnet,** daß die Fotodioden (26, 28) in transparentem Kunststoff eingeschlossen sind.

3. Vorrichtung nach Anspruch 1 oder 2, **dadurch gekennzeichnet,** daß der Fotosensor (22) im äußeren Bereich der Lamelle (18) befestigt ist.

4. Vorrichtung nach einem der Ansprüche 1 bis 3, **dadurch gekennzeichnet,** daß der weitere Fotosensor (24) an einem Gehäuse (16) oder Führungsteil des Raffstores (14) befestigbar ist.

5. Vorrichtung nach einem der Ansprüche 1 bis 4, **dadurch gekennzeichnet,** daß der weitere Fotosensor (24) mehrere, vorzugsweise drei, auf unterschiedliche Himmelsrichtungen ausgerichtete Fotodioden (24, 36, 38) aufweist, welche zusammen den Lichteinfall über den Winkelbereich von 180° vor dem Raffstore (14) erfassen.

6. Vorrichtung nach einem der Ansprüche 1 bis 5, **dadurch gekennzeichnet,** daß Anschlußleitungen der Fotosensoren (22, 24) in oder an Führungsschienen für die Lamellen (18) montiert sind.

7. Vorrichtung nach einem der Ansprüche 1 bis 6, **dadurch gekennzeichnet,** daß sie mit einem Windmesser verbunden ist.

## Claims

1. A device for controlling at least one blind (14) with a screen which comprises slats (18) and which is movable between a retracted position (14a) and a shading position, and the slats (18) of which can be turned by a motor (20) and can be adjusted in their shielding angle by means of a photocell (22) connected to one slat (18), wherein the photocell (22) comprises two photodiodes (26, 28) which are arranged one behind the other from the outside inwards in relation to the window (12) in such a way that as a result of non-uniform radiation they register a certain deviation of the angle of inclination of the incident rays of sunshine from a normal on the base surface of the slat, characterised in that the photocell (22) is mounted in an opening in the slat (18) and the photodiodes (26, 28) form an angle with one another, and in that a further photocell (24) is provided which, when a given background brightness is reached, generates a control signal to move the screen by means of a motor (20) from the retracted position (14a) into a shading position.

2. A device according to Claim 1, characterised in that the photodiodes (26, 28) are enclosed in transparent plastics material.

3. A device according to Claim 1 or 2, characterised in that the photocell (22) is secured in the outer region of the slat (18).

4. A device according to any one of Claims 1 to 3, characterised in that the further photocell (24) can be secured to a housing (16) or guide part of the blind (14).

5. A device according to any one of Claims 1 to 4, characterised in that the further photocell (24) has a plurality, preferably three, photodiodes (24, 36, 38) which are orientated in different directions and which together detect the light incidence over an angle range of 180° in front of the blind (14).

6. A device according to any one of Claims 1 to 5, characterised in that connecting leads for the photocells (22, 24) are mounted in or on guide rails for the slats (18).

7. A device according to any one of Claims 1 to 6, characterised in that it is connected to an anemometer.

## Revendications

1. Dispositif pour commander au moins un store vénitien (14) avec une tenture constituée de lamelles (18), qui est mobile entre une position remontée (14a) et une position d'ombrage et dont on peut faire tourner les lamelles (18) à l'aide d'un moteur (20), et dont on peut régler l'angle d'ombrage au moyen d'un capteur photosensible (22) solidaire d'une lamelle, le capteur photosensible (22) est constitué de deux photodiodes (26, 28) disposées l'une derrière l'autre par rapport à la fenêtre (12) dans le sens de l'extérieur vers l'intérieur de sorte que par suite d'une irradiation inégale elles puissent enregistrer une variation définie de l'angle d'inclinaison des rayons solaires incidents par rapport à la normale sur la surface de base de la lamelle, caractérisé en ce que le capteur photosensible (22) est placé dans une échancrure de lamelle (18) et que les photodiodes (26, 28) forment un angle entre elles et qu'il existe un autre capteur photosensible (24), qui, lorsqu'une certaine clarté de base est atteinte, émet un signal de commande pour déplacer la tenture au moyen du moteur (20) de la position remontée (14a) en une position d'ombrage.

2. Dispositif selon la revendication 1, caractérisé en ce que les photodiodes (26, 28) sont incluses dans de la matière plastique transparente.

3. Dispositif selon la revendication 1 ou 2, caractérisé en ce que le capteur photosensible (22) est fixé à l'extérieur de la lamelle (18).

4. Dispositif selon l'une des revendications 1 à 3, caractérisé en ce que l'autre capteur photosensible (24) peut être fixé sur un boîtier (16) ou une pièce de guidage du store vénitien (14).

5. Dispositif selon l'une des revendications 1 à 4, caractérisé en ce que l'autre capteur photosensible (24) présente plusieurs, de préférence trois photodiodes (24, 36, 38) dirigées vers différentes directions du ciel (24, 36, 38) qui saisissent globalement l'incidence de lumière sur l'espace angulaire de 180° en avant du store vénitien (14).

6. Dispositif selon l'une des revendications 1 à 5, caractérisé en ce que les fils de connexion des capteurs photosensibles (22, 24) sont placés dans ou sur les rails de guidage des lamelles (18).

7. Dispositif selon l'une des revendications 1 à 6, caractérisé en ce qu'il est relié à un anémomètre.
